Europäisches Patentamt

European Patent Office

Office européen des brevets

(11) Publication number: **0 129 954**
**A1**

## (12) EUROPEAN PATENT APPLICATION

(21) Application number: **84302036.3**

(22) Date of filing: **27.03.84**

(51) Int. Cl.⁴: **G 05 D 23/01**
**C 09 K 5/06**

(30) Priority: **22.06.83 US 506915**

(43) Date of publication of application:
**02.01.85 Bulletin 85/1**

(84) Designated Contracting States:
**DE FR GB NL**

(71) Applicant: **MOBIL OIL CORPORATION**
**150 East 42nd Street**
**New York New York 10017(US)**

(72) Inventor: **Givens, Wyatt Wendell**
**10338 Carry Back Circle**
**Dallas Texas 75229(US)**

(72) Inventor: **Stromswold, David Charles**
**4015 Bobbin Lane**
**Addison Texas 75234(US)**

(74) Representative: **West, Alan Harry**
**Mobil Court 3 Clements Inn**
**London WC2A 2EB(GB)**

(54) A passive temperature control system.

(57) A passive temperature control system includes an instrumentation housing (21) in which a solid heat absorbing material (23) is located. Heat transfer to the interior of the housing (21) is absorbed by the heat absorbing material (23) through a change in phase from solid to liquid. The temperature within the housing is controlled by the melting temperature of the heat absorbing material (23) until the solid heat absorbing material (23) melts.

FIG. 1

## A PASSIVE TEMPERATURE CONTROL SYSTEM

This invention relates to a system for the passive temperature control of borehole logging instruments and more particularly to means for housing instrumentation such as electronic equipment and nuclear radiation detectors so as to provide a control of the operating temperature for such instrumentation during logging operations under increasing borehole temperatures with depth.

Various apparatus have been utilized in the well logging art to control the temperature of downhole logging instrumentation. Borehole temperatures can rise to as much as several hundred degrees Fahrenheit. One such apparatus is the Borg-Warner HT-75 thermoelectric refrigerator. This is a solid-state device which eliminates the need for a compressor, refrigerant fluids or piping. Electronic thermoelectric modules along with natural convection fins are used to cool downhole instrumentation and dissipate heat to the ambient air. In situations where cryogenic temperatures must be maintained, liquid nitrogen and frozen propane have been used to provide cooling. For temperatures above 100°F (38°C) alloys of bismuth have been used to absorb heat, a common example being an alloy of bismuth, lead, tin, and cadmium that melts at 158°F (70°C).

In accordance with the present invention there is provided a passive temperature system for housing temperature sensitive instrumentation comprising

(a)  an insulating housing,

(b)  heat absorbing material located within said insulating housing for absorbing heat transferred into the interior of said housing through a change in phase from solid to liquid; and

(c)  means for containing said heat absorbing material as heat is absorbed thereby and the solid material begins to change to the liquid state.

Using the system of the invention, any heat transferred through the insulating housing to the interior of the housing, which also accommodates the temperature sensitive instrumentation, is absorbed through a change in phase of the heat absorbing material from solid to liquid state.  The heat absorbing material can maintain its melting temperature within the housing under exterior temperatures up to 400°F (204°C) until the heat absorbing material has melted.

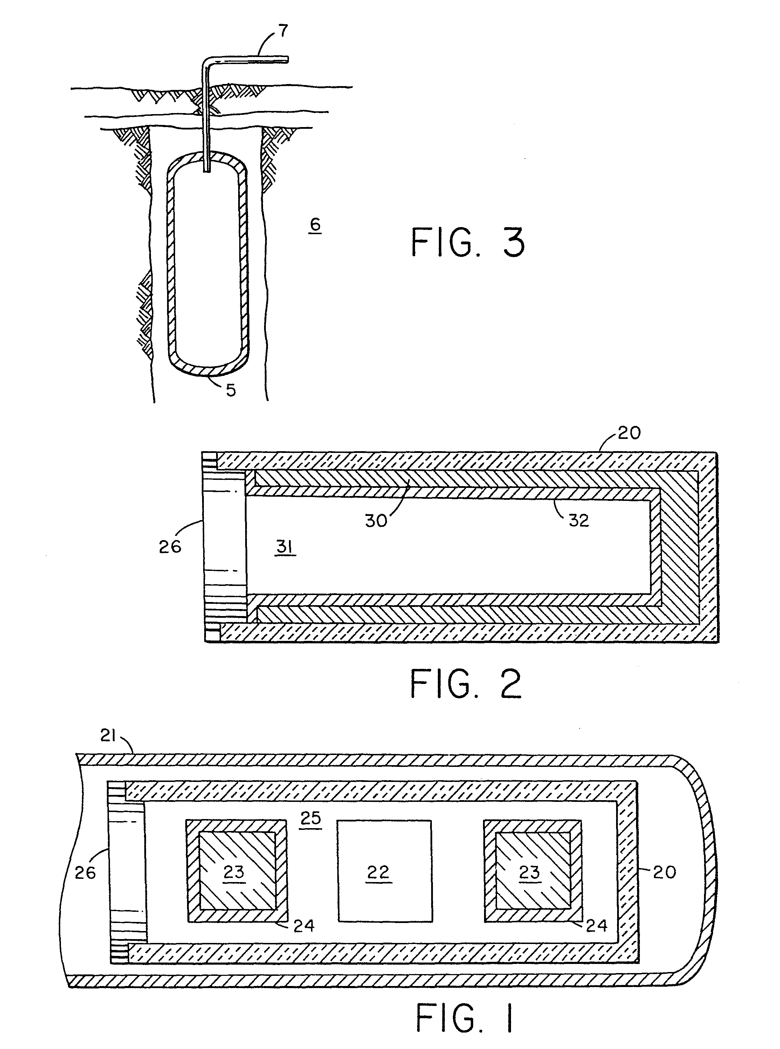

In the accompanying drawings, FIGS. 1 and 2 illustrate first and second examples of the passive temperature control system of the present invention.

FIG. 3 illustrates a borehole logging system employing the temperature control system of FIG. 1 or FIG. 2.

Referring to FIG. 1, the system includes a vacuum insulating flask 20 which is located within the housing or pressure shell 21 of a borehole logging tool. The instrumentation 22 to be protected against rises in temperature is placed within the inner chamber 25 of vacuum flask 20 which is closed by an insulating plug 26.  The flask 20 reduces the flow of heat into the interior of the flask, but any heat which does reach the interior of the flask is absorbed by a heat absorbing material 23 through a change of phase of the material from solid to liquid.  The temperature within the flask is controlled by the melting temperature of the heat absorbing material until such material melts.  In remote applications, such as the well logging operation of FIG. 3 wherein a subsurface formation 6 is logged with the borehole logging tool 5 and logging cable 7, the temperature control system shown has the specific advantage of being passive, that is, requiring no electrical power input.

A particularly suitable heat absorbing material is gallium, a metal that melts at 86°F (30°C), has a heat of fusion (heat required for melting) of 19 calories per gram, and has a density of 5.9 grams/cm$^3$.  These properties make it ideal as a compact heat absorber for use herein.  The gallium, or other suitable heat absorbing material, is contained in a metallic container or containers 24, conveniently formed of copper, to facilitate heat transfer into the gallium and to hold the liquid when the solid gallium begins to melt. In one experiment a vacuum flask, four feet (1.22 m) long with an internal diameter of 2.4 inches (6.1 cm), housed one kilogram of gallium contained in copper cylinders. A temperature of up to 392°F (200°C) was applied to the outside of the flask. The internal temperature remained below 90°F (32°C) for five hours due to the melting of the gallium.

Materials other than pure gallium which are suitable for use as heat absorbers in borehole logging operations include alloys of gallium with indium and tin (which melt at 50°F (10°C) and 80°F (27°C) respectively), glycerine (which melts at 65°F (18°C)), and ice (which melts at 32°F (0°C)). In an experiment using 380 grams of ice in the same vacuum flask used with gallium, the internal temperature of the flask remained below 40°F (4°C) for seven hours in the 392°F (200°C) environment.

In the second example shown in FIG. 2, the heat absorbing material is in the form of a lining 30 in the inner wall of the flask 20 and is held in position by a metallic liner 32.

In a further embodiment (not shown) the flask 20 and liner 32 of the second example may be replaced by a double walled housing with the heat absorbing material contained within the double walled housing. It will be appreciated that additional blocks of heat absorbing material may be placed in containers such as shown in FIG. 1 or placed in the inner chamber 31 of FIG. 2 to give added heat absorbing capability.

F-2297                                    - 4 -

CLAIMS:

1.  A passive temperature control system, comprising:
    (a)  an insulating housing,
    (b)  heat absorbing material located within said
insulating housing for absorbing heat transferred into the interior of
said housing through a change in phase from solid to liquid; and
    (c)  means for containing said heat absorbing material as
heat is absorbed thereby and the solid material begins to change to
the liquid state.

2.  The system of Claim 1 wherein said insulating housing is
a vacuum insulating flask.

3.  The system of Claim 1 or Claim 2 wherein said means for
containing said heat absorbing material is a heat conductive material
so as to facilitate heat transfer to said heat absorbing material.

4.  The system of any preceding claim wherein said insulating
housing is lined with said solid heat absorbing material and said
solid heat absorbing material is held in place by a containing liner.

5.  The system of Claim 1 wherein said insulating housing is
double walled and said heat absorbing material is contained within
said double walled housing.

6.  The system of any preceding claim wherein said heat
absorbing material is gallium or a gallium alloy.

7.  The system of any preceding claim wherein said heat
absorbing material is an alloy of gallium with indium or tin.

8.  The system of any one of Claims 1 to 5 wherein said heat
absorbing material is glycerine.

F-2297                              - 5 -

9.   The system of any one of Claims 1 to 5 wherein said heat absorbing material is ice.

10. The system of any preceding claim wherein the system forms part of a borehole logging tool and the insulating housing accommodates temperature sensitive equipment of said tool.

2839H/0176H

1/1

0129954

FIG. 3

FIG. 2

FIG. 1

## European Patent Office

### EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 351 385 (G.C. AMEY) * Figure 1; claims * | 1 | G 05 D 23/01 C 09 K 5/06 |
| A | DE-A-2 802 942 (CIBA-GEIGY AG) * Figure; page 7, paragraph 3 - page 13 * | 1,5 | |
| A | GB-A-1 540 835 (NATIONAL RESEARCH DEVELOPMENT CORP.) * Claim 45 * | 9 | |
| | | | **TECHNICAL FIELDS SEARCHED (Int. Cl. ³)** |
| | | | G 05 D 23/00 C 09 K 5/00 |

The present search report has been drawn up for all claims

| Place of search | Date of completion of the search | Examiner |
|---|---|---|
| BERLIN | 27-08-1984 | BEYER F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82